# EUROPÄISCHE PATENTSCHRIFT

(11) **EP 0 557 604 B1**
(45) Veröffentlichungstag und Bekanntmachung des Hinweises auf die Patenterteilung: **24.05.1995**
(21) Anmeldenummer: 92121025.8
(22) Anmeldetag: 10.12.1992
(51) Int. Cl.: B01L 9/00, G01N 35/00

(54) **Vorratsbehälter**
Storage container
Récipient de stockage

(30) Priorität: 25.02.1992 DE 9202381 U
(43) Veröffentlichungstag der Anmeldung: 01.09.1993
(73) Patentinhaber: HEINRICH AMELUNG GmbH, D-32657 Lemgo (DE)
(72) Erfinder: Eggl, Wilfried, W-4920 Lemgo (DE)
(74) Vertreter: Stracke, Alexander, Dipl.-Ing.

(56) Entgegenhaltungen:
- DE-U- 8 717 310
- US-A- 3 142 385
- US-A- 4 803 048
- PATENT ABSTRACTS OF JAPAN vol. 7, no. 245 (P-233)(1390) 29. Oktober 1983

## Beschreibung

Die vorliegende Erfindung betrifft einen mit Meßgefäßen zur Aufnahme von zu untersuchenden Flüssigkeiten wie Blut, Blutplasma oder dergleichen bestückten, quaderförmigen Vorratsbehälter gemäß dem Oberbegriff des Anspruchs 1. Solche Vorratsbehälter sind z.B. aus der JP-A-58 131 567 bekannt.

Derartige Vorratsbehälter werden eingesetzt, um die Meßgefäße automatisch einem Untersuchungsautomaten zuzuführen.
Dabei dienen die Durchbrechungen sowie der Ausstoßschlitz in einer Transportvorrichtung vorgesehenen Schiebern, mit denen die einzelnen Meßgefäße kontinuierlich dem Untersuchungsautomaten zugeführt werden.

Um Verschmutzungen der Meßgefäße zu vermeiden, d. h., um zu verhindern, daß durch die Durchbrechungen Schmutz in die offenen Meßgefäße gelangt, ist es bekannt, den Vorratsbehälter nach der werksseitigen Bestückung mit Meßgefäßen mit einer Folie vollständig zu umhüllen.
Mittels eines Aufreißbandes wird vor dem Einlegen des Vorratsbehälters in den Beschickungsautomaten die Folie aufgerissen, so daß sie bequem entfernt werden kann.

Nachteilig bei dieser Art der Schutzverpackung ist jedoch, daß eine relativ große Folienmenge erforderlich ist, um den gewünschten Schutz zu erreichen.

Abgesehen davon, daß dadurch zusätzliche Kosten entstehen, muß diese relativ große Menge an Folie bei Nichtgebrauch, d. h. nach dem Entfernen vom Vorratsbehälter, entsorgt werden.

Insbesondere unter dem Gesichtspunkt größtmöglicher Abfallvermeidung stellt sich daher die bislang gebräuchliche Schutzverpackung als problematisch dar. Dabei kommt erschwerend hinzu, daß die Meßgefäße in einer großen Stückzahl Verwendung finden, so daß auch eine sehr große Menge Folienabfall anfällt.

Um die Verwendungsfähigkeit der Meßgefäße zu verbessern, werden diese mit kleinen Stahlkugeln bestückt, so daß nicht nur eine Untersuchung der Flüssigkeiten mittels photometrischer Messungen möglich ist, sondern auch Messungen nach der sogenannten Kugel-Methode.

Dazu werden die Kugeln vor dem Einpacken der Meßgefäße in den Vorratsbehälter in die Meßgefäße eingebracht, wo sie lose einliegen.

Bei der bisher üblichen Schutzverpackung mittels der, wie beschrieben, Umhüllungsfolie, die ja den gesamten Vorratsbehälter außenseitig abdeckt, besteht die Gefahr, daß die Kugeln aus den Meßgefäßen herausrutschen, so daß diese nicht mehr für einen automatischen Untersuchungsablauf geeignet sind.

Der vorliegenden Erfindung liegt daher die Aufgabe zugrunde, einen Vorratsbehälter der gattungsgemäßen Art so zu gestalten, daß seine Herstellungskosten gesenkt, die Abfallprobleme durch die Schutzfolie gemindert und die Verwendungsfähigkeit verbessert wird.

Diese Aufgabe wird erfindungsgemäß durch die im kennzeichnenden Teil des Anspruchs 1 genannten Merkmale gelöst.

Nunmehr besteht der Schutz der Meßgefäße praktisch nur aus einer Folie, die etwa der Größe einer Breitseite des Vorratsbehälters entspricht.
Da hier nur ein Bruchteil des Folienmaterials zum Einsatz kommt, ergeben sich naturgemäß sowohl Vorteile hinsichtlich der Beschaffungskosten als auch hinsichtlich der Entsorgung.

Die Folie wird durch die die Oberseite des Vorratsbehälters bildende Breitseite praktisch festgeklemmt, so daß ein fester Sitz gewährleistet ist und die Folie nicht verrutschen kann.

Dadurch, daß die Folie unmittelbar auf den Meßgefäßen aufliegt und dabei die Einlaßöffnungen verschließt, ist ein Herausfallen von Kugeln, die in die Meßgefäße eingebracht wurden, selbst dann nicht möglich, wenn der Vorratsbehälter beispielsweise beim Transport so gedreht sein sollte, daß die Einlaßöffnungen der Meßgefäße nach unten zeigen.

Eine vorteilhafte Ausgestaltung der Erfindung sieht vor, daß die Folie mit einer Lasche versehen ist, die in den Ausstoßschlitz ragt, so daß durch das Ziehen an der Lasche ein einfaches Herausziehen der Folie möglich ist.

Ein weiterer Vorteil der Erfindung liegt darin, daß die Folie durch die Oberseite des Vorratsbehälters geschützt ist, so daß eine Beschädigung der Folie und somit die Gefahr der Verschmutzung der Meßgefäße erheblich verringert ist.

Ein Ausführungsbeispiel der Erfindung wird nachfolgend anhand der beigefügten Zeichnung beschrieben.

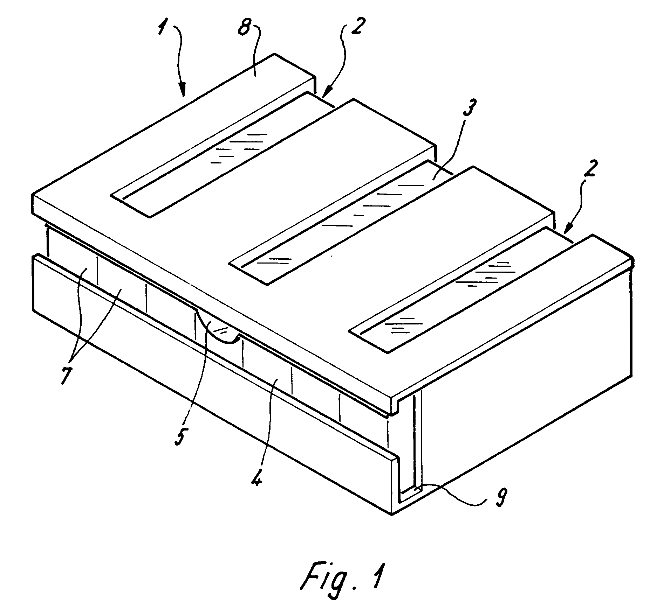

Die Figur 1 zeigt einen erfindungsgemäßen Vorratsvehälter in perspektivischer Darstellung.

Der in der Figur 1 gezeigte quaderförmige Vorratsbehälter 1 ist mit einer Vielzahl von gleichfalls quaderförmigen Meßgefäßen 7 bestückt, die nebeneinanderstehend angeordnet sind und die der Aufnahme von zu untersuchenden Flüssigkeiten wie Blut, Blutplasma oder dergleichen dienen.

In einer die Oberseite 8 des Vorratsbehälters 1 bildenden Breitseite sind drei, quer zur Längsachse verlaufende, parallel und mit Abstand zueinander angeordnete Durchbrechungen 2 vorgesehen, in die nicht dargestellte Schieber oder ähnliche Vorrichtungsteile eines Zuführautomaten eingreifen können, der die Meßgefäße 7 einem Untersuchungsautomaten zuführt.

Dem gleichen Zweck dient ein Ausstoßschlitz 4, der an einer Längsseite des Vorratsbehälters 1 angeordnet ist und sich über die gesamte Länge erstreckt, wobei die Stirnseiten des Vorratsbehälter in ihrem, dem Ausstoßschlitz 4 benachbarten Bereich mit einer Öffnung 9 versehen sind, durch die die Meßgefäße 7 austreten können.

Die Meßgefäße 7 sind mit ihrer nicht dargestellten Einlaßöffnungsseite zur Oberseite 8 hin gerichtet.
Zwischen der Oberseite 8 und den Meßgefäßen 7 ist eine die Einlaßöffnungen abdeckende Folie 3 vorgesehen, die sich im wesentlichen über die gesamte, durch die Oberseite 8 bestimmte Fläche erstreckt.

In dem dem Ausstoßschlitz 4 zugewandten Längskantenbereich ist die Oberseite 8 abgewinkelt, wobei die Folie 3 entsprechend dieser Abwinklung um die Meßgefäße 7 herumgeführt ist, so daß eine feste Klemmung der Folie 3 erreicht wird.

In diesem Bereich ist die Folie, etwa mittig angeordnet, mit einer Lasche versehen, die in den Ausstoßschlitz 4 ragt, und mit der die Folie aus dem Vorratsbehälter 1 herausgezogen werden kann.

Wichtig für die Untersuchung der Flüssigkeiten ist, daß zum einen die Folie lediglich lose auf den Meßgefäßen 7 aufliegt, daß also keine Klebstoffpartikel in die Meßgefäße 7 gelangen können, und zum anderen, daß die Folie aus einem Material besteht, das keine Partikel, beispielsweise in Form von Fusseln, abgibt.

## Patentansprüche

1. Mit Meßgefäßen (7) zur Aufnahme von zu untersuchenden Flüssigkeiten wie Blut, Blutplasma oder dergleichen bestückter quaderförmiger Vorratsbehälter (1) mit in einer die Oberseite (8) bildenden Breitseite vorgesehenen, parallel und mit Abstand nebeneinanderliegenden, rechteckigen Durchbrechungen (2), wobei die Einlaßöffnungen der Meßgefäße den Durchbrechungen zugewandt liegen, und einem in einer benachbarten Längsseite vorgesehenen Ausstoßschlitz (4), **dadurch gekennzeichnet**, daß zwischen der Oberseite (8) und den Meßgefäßen (7) eine die Einlaßöffnungen abdeckende Folie (3) angeordnet ist, die vor Gebrauch der Meßgefäße aus dem Vorratsbehälter herausziehbar ist.

2. Vorratsbehälter nach Anspruch 1, bei dem die Oberseite in Richtung des Ausstoßschlitzes abgewinkelt ist, dadurch gekennzeichnet, daß die Folie (3) entsprechend der Abwinklung geführt ist.

3. Vorratsbehälter nach Anspruch 1 oder 2, dadurch gekennzeichnet, daß die Folie (3) mit einer in den Ausstoßschlitz (4) ragenden Lasche (5) versehen ist.

4. Vorratsbehälter nach Anspruch 3, dadurch gekennzeichnet, daß die Lasche (5) mittig angeordnet ist.

## Claims

1. A parallelepipedic storage container (1) provided with measurement vessels (7) for receiving liquids to he investigated such as blood, blood plasma or the like, the storage container having rectangular openings (2) which are provided in a wide side forming the top side (8) and which are disposed parallel and at a spacing in juxtaposed relationship, wherein the inlet apertures of the measurement vessels are disposed towards the openings (2), and an ejection slot (4) provided in an adjacent longitudinal side, characterised in that disposed between the top side (8) and the measurement vessels (7) is a foil (3) which covers the inlet apertures and which can be pulled out of the storage container prior to use of the measurement vessels.

2. A storage container according to claim 1 wherein the top side is angled over in the direction of the ejection slot, characterised in that the foil (3) is guided in accordance with the angular configuration.

3. A storage container according to claim 1 or claim 2 characterised in that the foil (3) is provided with a tab (5) which projects into the ejection slot (4).

4. A storage container according to claim 3 characterised in that the tab (5) is arranged centrally.

## Revendications

1. Récipient de stockage (1) en forme de parallélépipède, équipé de compartiments de mesure (7) destinés à contenir des substances liquides à examiner, telles que du sang, du plasma sanguin ou similaire, pourvu de perçages (2) rectangulaires parallèles et situés les uns à côté des autres avec un certain écartement, prévus dans un côté plat formant la face supérieure (8), les ouvertures de remplissage des compartiments de mesure étant orientées en direction des perçages, et pourvu d'une fente d'expulsion (4) prévue dans un grand côté adjacent, caractérisé en ce qu'est disposée, entre la face supérieure (8) et les compartiments de mesure (7), une feuille (3) recouvrant les ouvertures de remplissage, qui est susceptible d'être retirée du récipient de stockage avant l'utilisation des compartiments de mesure.

2. Récipient de stockage selon la revendication 1, dans lequel la face supérieure est repliée en direction de la fente d'expulsion, caractérisé en ce que la feuille (3) a une forme qui correspond au repli.

3. Récipient de stockage selon la revendication 1 ou 2, caractérisé en ce que la feuille (3) est pourvue d'une patte (5) qui pénètre dans la fente d'expulsion (4).

4. Récipient de stockage selon la revendication 3, caractérisé en ce que la patte (5) est disposée au milieu.
